# EUROPÄISCHE PATENTSCHRIFT

(11) **EP 1 998 089 B1**
(45) Veröffentlichungstag und Bekanntmachung des Hinweises auf die Patenterteilung: **26.08.2009**
(21) Anmeldenummer: 07010700.8
(22) Anmeldetag: 30.05.2007
(51) Int. Cl.: F16J 15/32

(54) **Dichtungsanordnung, Dichtring und deren Verwendung**
Seal assembly, gasket and its use
Agencement de joint, bague d'étanchéité et leur utilisation

(43) Veröffentlichungstag der Anmeldung: 03.12.2008
(73) Patentinhaber: Carl Freudenberg KG, 69469 Weinheim (DE)
(72) Erfinder: Borstel, Dieter von, 21720 Guderhardviertel (DE); Ristic, Ivan, 22337 Hamburg (DE)

(56) Entgegenhaltungen:
- DE-A1- 3 016 231
- DE-A1- 3 603 669
- DE-A1- 4 124 221
- FR-A- 1 075 703
- US-A- 4 560 174
- US-A- 4 582 366

## Beschreibung

Die Erfindung betrifft eine Dichtungsanordnung, umfassend einen Dichtring zur gegenseitigen Abdichtung zweier Maschinenelemente, wobei der Dichtring in einem in Richtung des abzudichtenden ersten Maschinenelements offenen Einbauraum des zweiten Maschinenelements angeordnet ist und die abzudichtende Oberfläche des ersten Maschinenelements mit zumindest einer dynamisch beanspruchten ersten Dichtlippe dichtend berührt, wobei der Dichtring unter elastischer axialer und radialer Vorspannung innerhalb des Einbauraums angeordnet ist, wobei der Dichtring zumindest einen statischen ersten und einen statischen dritten Dichtbereich und einen zweiten Dichtbereich aufweist, wobei der Einbauraum im Wesentlichen nutförmig ausgebildet ist und wobei der erste Dichtbereich den Nutgrund, der zweite Dichtbereich eine erste Begrenzungswand und der dritte Dichtbereich eine zweite Begrenzungswand des Einbauraums unter elastischer Vorspannung anliegend berührt.

### Stand der Technik

Eine solche Dichtungsanordnung ist aus der FR-A-1 075 703 bekannt. Der Dichtring der vorbekannten Dichtungsanordnung ist unter elastischer axialer und radialer Vorspannung innerhalb des Einbauraums angeordnet, wobei die drei Dichtbereiche jeweils eben ausgebildet sind und den Nutgrund sowie die beiden Begrenzungswände vollflächig und anliegend berühren. Die erste und die zweite Begrenzungswand, die jeweils parallel zueinander angeordnet sind, werden vom zweiten und dritten Dichtbereich entlang ihrer gesamten radialen Erstreckung vollflächig überdeckt und anliegend berührt. Die Anordnung des Dichtrings unter axialer und radialer Vorspannung wird durch die elastische Verformung des Dichtrings erreicht.

Aus der US-A-4 560 174, der DE 36 03 669 A1, der DE 41 24 221 A1, der DE 30 16 231 A1 und der US-A-4 582 366 sind ebenfalls Dichtungsanordnungen mit Dichtringen bekannt, die unter elastischer axialer und radialer Vorspannung innerhalb ihres Einbauraums angeordnet sind. Die Dichtringe sind dabei einteilig oder mehrteilig ausgebildet, wobei die mehrteilig ausgebildeten Dichtringe durch einen Dichtring und einen Anpressring gebildet sind.
Die Montage der vorbekannten Dichtringe, insbesondere die Montage der Dichtringe, die in einstückigen und nutförmigen in Richtung des abzudichtenden ersten Maschinenelements offenen Einbauräumen des zweiten Maschinenelements angeordnet sind, ist wenig zufriedenstellend, da während der Montage die Gefahr besteht, dass die mit einem relativen Übermaß, bezogen auf den Einbauraum, versehenen Dichtringe montagebedingt beschädigt werden.

Eine weitere Dichtungsanordnung, die einen Dichtring umfasst, ist aus der DE 103 14 533 A1 bekannt. Die Dichtungsanordnung umfasst als Dichtring einen Nutring aus einem zähelastischen Kunststoff, der in einem U-förmigen, radial nach innen offenen Einbauraum des zweiten Maschinenelements angeordnet und als Berührungsdichtung zwischen den beiden Maschinenelementen unter radialer Vorspannung im Einbauraum angeordnet ist. Hochdruckseitig weist der Nutring eine radial äußere, statisch belastete Dichtlippe und eine radial innere, dynamisch belastete Dichtlippe auf. Niederdruckseitig weist der Nutring eine Anlagefläche auf, die die benachbarte Begrenzungswand anliegend berührt. In axialer Richtung ist der Nutring relativ beweglich mit Spiel innerhalb des Einbauraums angeordnet. Durch eine spezielle Geometrie des Nutrings soll die Haltbarkeit des Nutrings verbessert werden, etwa dadurch, dass Abrieb von Nutringmaterial vermieden wird.

### Darstellung der Erfindung

Der Erfindung liegt die Aufgabe zugrunde, eine Dichtungsanordnung und einen Dichtring der vorbekannten Art derart weiterzuentwickeln, dass ein Mitdrehen des Dichtrings im Einbauraum, insbesondere ohne Druckbeaufschlagung des Dichtrings, sicher vermieden wird, und zwar auch dann, wenn sich die Drehrichtung des abzudichtenden ersten Maschinenelements häufig ändert.

Diese Aufgabe wird erfindungsgemäß mit den Merkmalen der Ansprüche 1 und 10 gelöst. Auf vorteilhafte Ausgestaltungen nehmen die Unteransprüche Bezug.

Zur Lösung der Aufgabe ist es vorgesehen, dass der erste Dichtbereich den Nutgrund auf der dem abzudichtenden Raum zugewandten Seite und der dem abzudichtenden Raum zugewandte zweite Dichtbereich die erste Begrenzungswand auf der dem Nutgrund zugewandten Seite berührt, dass die Dichtbereiche (8, 9, 10) im Wesentlichen lippenförmig ausgebildet sind, der dritte Dichtbereich die zweite Begrenzungswand im Wesentlichen mittig berührt, dass der zweite und der dritte Dichtbereich der gebrauchsfertigen Dichtungsanordnung mit im Einbauraum eingebautem Dichtring, der die abzudichtende Oberfläche dichtend berührt, jeweils mittig durch eine gedachte Verbindungslinie verbindbar sind, die mit der abzudichtenden Oberfläche einen Winkel einschließt, der 10° bis 30° beträgt, wobei das Verhältnis der Länge der Verbindungslinie zwischen dem zweiten und dem dritten Dichtbereich zur Ausdehnung des Einbauraums parallel zur Erstreckung der abzudichtenden Oberfläche 1,1 bis 1,3 beträgt.

Durch eine derartige Ausgestaltung ist von Vorteil, dass ein Mitdrehen des Dichtrings im Einbauraum während der bestimmungsgemäßen Verwendung der Dichtungsanordnung zuverlässig verhindert wird, insbesondere auch dann, wenn, bezogen auf die Umgebung, innerhalb des abzudichtenden Raumes kein Überdruck herrscht, der den Dichtrings verstärkt an die abzudichtenden Flächen des ersten und/oder zweiten Maschinenelements andrückt.

Separat herzustellender Verdrehsicherungen, die ein Mitdrehen des Dichtrings mit dem abzudichtenden ersten Maschinenelement verhindern, bedarf es dabei nicht. Der Dichtring ist einfach und kostengünstig herstellbar. Durch die vergleichsweise große Anzahl der statischen Dichtbereiche, die den Nutgrund und die beiden Begrenzungswände unter elastischer Vorspannung dichtend und anliegend berühren, wird der Dichtring auch dann kraftschlüssig drehfest innerhalb des Einbauraums gehalten, wenn sich beispielsweise die Drehrichtung der abzudichtenden Oberfläche häufig ändert, beispielsweise dann, wenn das erste Maschinenelement als Antrieb eines Verstellpropellers ausgebildet ist, oder wenn die erste Dichtlippe nach langen Stillstandzeiten verstärkt an der abzudichtenden Oberfläche anhaftet. Auch erhöhte Reibung zwischen den dynamisch beanspruchten Dichtlippen und der abzudichtenden Oberfläche, beispielsweise durch Verunreinigungen, hat keinen Einfluss auf die drehfeste Zuordnung des Dichtrings zum zweiten Maschinenelement.

Der Dichtring kann zwei mit Abstand zueinander benachbart angeordnete dynamisch beanspruchte erste und zweite Dichtlippen aufweisen, die die abzudichtende Oberfläche des ersten Maschinenelements unter elastischer Vorspannung dichtend berühren. Die eigentliche Dichtlippe ist dem abzudichtenden Raum zugewandt. Die Dichtlippe, die auf der dem abzudichtenden Raum abgewandten Seite der ersten Dichtlippe angeordnet ist, ist als Schutzlippe ausgebildet, die außer dem Schutz vor eindringenden Schmutzpartikeln die Aufgabe hat, bei der Montage die Kräfte von der abzudichtenden Fläche auf den Dichtring zu übertragen und dadurch dafür zu sorgen, dass der Dichtring im Einbauraum gekippt und dadurch drehfest innerhalb des Einbauraums angeordnet/eingeklemmt wird.

Der Einbauraum kann im Wesentlichen C-förmig ausgebildet und axial in Richtung eines Radialvorsprungs des ersten Maschinenelements offen sein. In einem solchen Fall erstreckt sich die abzudichtende Oberfläche senkrecht zur Rotationsachse des ersten Maschinenelements. Eine solche Ausgestaltung liegt z.B. vor, wenn verstellbare Blätter von Schiffsschrauben abgedichtet werden müssen.

Das erste Maschinenelement kann durch eine dreh- und/oder schwenkbare Welle gebildet sein. Das erste Maschinenelement kann beispielsweise als Antrieb eines Verstellpropellers einer modernen Schiffsschraube ausgebildet sein. Speziell für eine solche Verwendung ist die beanspruchte Dichtungsanordnung besonders vorteilhaft, weil sich während des Betriebs von Verstellpropellern sehr häufig die Drehrichtung geändert, lange Stillstandzeiten auftreten können, nach denen die Dichtlippen verstärkt an der abzudichtenden Oberfläche anhaften und weil häufig Verunreinigungen die Reibung zwischen den Dichtlippen und der abzudichtenden Fläche erhöhen.

Durch die axiale und radiale Vorspannung des Dichtrings in seinem Einbauraum ist eine Verdrehsicherung des Dichtrings im Einbauraum gebildet, wobei die axiale und radiale Vorspannung derart bemessen sind, dass im drucklosen Betrieb der Dichtungsanordnung ein Mitdrehen des Dichtrings mit dem abzudichtenden ersten Maschinenelement, relativ zum zweiten Maschinenelement, verhindert wird. Dadurch wird der Verschleiß auf ein Minimum reduziert und die Dichtungsanordnung weist gleich bleibend gute Gebrauchseigenschaften während einer langen Gebrauchsdauer auf.

Um eine gute Sicherheit des Dichtrings gegen das Mitdrehen zu erhalten, kann das Verhältnis der Ausdehnung des Einbauraums parallel zur Erstreckung der abzudichtenden Oberfläche zur Ausdehnung des Dichtrings im herstellungsbedingten, nicht-eingebauten Zustand in gleicher Richtung größer als 0,9 ist. Ein solches Verhältnis ist entscheidend für eine problemlose Montage des Dichtrings in den Einbauraum. Der vergleichsweise kleinere Dichtring kann unter Vermeidung von Montagefehlern und/oder Beschädigungen einfach und zunächst mit Spiel parallel zur Richtung der Erstreckung der abzudichtenden Oberfläche in den Einbauraum des zweiten Maschinenelements eingesetzt werden. Anschließend, bei Montage des abzudichtenden ersten Maschinenelements, wird der Dichtring durch Druck von der abzudichtenden Oberfläche im Einbauraum gekippt und verspannt sich dadurch selbsttätig in radialer und axialer Richtung gegen die Begrenzungswände und den Nutgrund des Einbauraums. Das genannte Verhältnis hat Einfluss auf die Stärke der Verklemmung des Dichtrings innerhalb seines Einbauraums, parallel zur Erstreckung der abzudichtenden Oberfläche. Durch das genannte Verhältnis wird einerseits eine problemlose Montage gewährleistet, bei andererseits ausreichender Klemmkraft, so dass ein Mitdrehen des Dichtrings innerhalb seines Einbauraums mit dem ersten Maschinenelement sicher vermieden wird.

Außerdem betrifft die Erfindung die Verwendung einer Dichtungsanordnung und eines Dichtrings, wie zuvor beschrieben, zur Abdichtung von Dreh- und/oder Schwenkbewegungen eines Verstellpropellers.

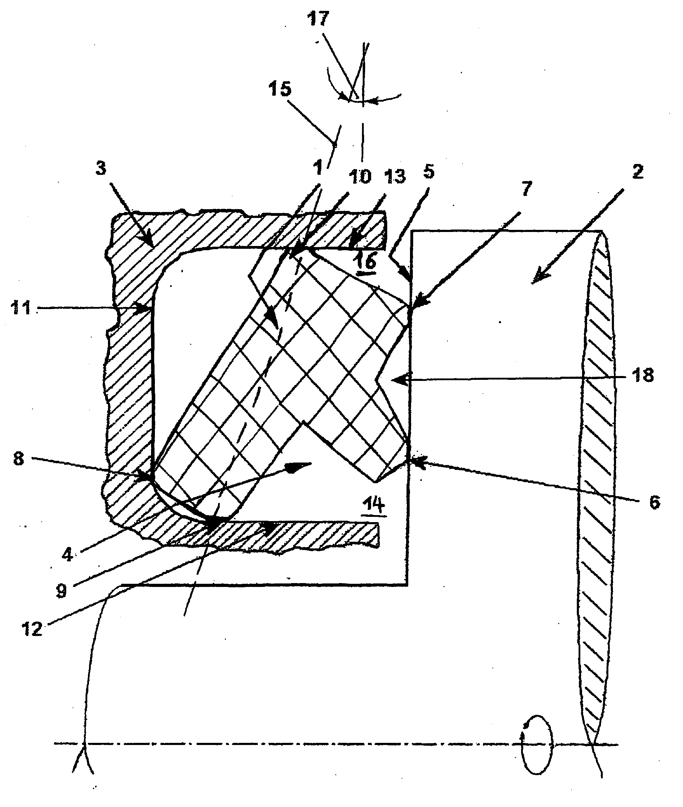

### Kurzbeschreibung der Zeichnung

Ein Ausführungsbeispiel einer erfindungsgemäßen Dichtungsanordnung wird nachfolgend anhand der Figur näher erläutert.

In der Figur ist ein Ausführungsbeispiel einer beanspruchten Dichtungsanordnung in schematischer Darstellung gezeigt.

### Ausführung der Erfindung

Die in der Figur dargestellte Dichtungsanordnung gelangt zur Abdichtung von Dreh- und/oder Schwenkbewegungen eines Verstellpropellers einer modernen Schiffsschraube zur Anwendung. Der Dichtring 1 besteht in diesem Ausführungsbeispiel vollständig aus einem geeigneten Dichtungswerkstoff, was im Hinblick auf eine einfache und kostengünstige Verstellbarkeit von hervorzuhebendem Vorteil ist. Das erste Maschinenelement 2 ist im gezeigten Ausführungsbeispiel als Welle ausgebildet, die einen hier nicht dargestellten Verstellpropeller antreibt. Das zweite Maschinenelement 3 umschließt das erste Maschinenelement 2 mit der abzudichtenden, sich in radialer Richtung erstreckenden Oberfläche 5 und umfasst den in axialer Richtung offenen C-förmigen Einbauraum 4, in dem der Dichtring 1 unter elastischer axialer und radialer Vorspannung angeordnet ist. Die axiale und radiale Vorspannung ist derart bemessen, dass die Klemmkraft, mit der der Dichtring 1 zwischen dem ersten 2 und dem zweiten Maschinenelement 3 in axialer und radialer Richtung eingeklemmt ist, ausreicht, ein Mitdrehen des Dichtrings mit dem abzudichtenden ersten Maschinenelement 2 sicher zu vermeiden, auch, wenn innerhalb des abzudichtenden Raums 14 kein relativer Überdruck bezogen auf die Umgebung 16 herrscht.

Der erste Dichtbereich 8 berührt den Nutgrund 11 auf der dem abzudichtenden Raum 14 zugewandten Seite, der dem abzudichtenden Raum 14 zugewandte zweite Dichtbereich 9 berührt die erste Begrenzungswand 12 auf der dem Nutgrund 11 zugewandten Seite und der dritte Dichtbereich 11 die zweite Begrenzungswand 13 im Wesentlichen mittig. Der zweite Dichtbereich 9 und der dritte Dichtbereich 10 der gebrauchsfertigen Dichtungsanordnung mit im Einbauraum 4 eingebautem Dichtring 1, der die abzudichtende Oberfläche 5 dichtend berührt, sind jeweils mittig durch eine gedachte Verbindungslinie 15 verbindbar, die mit der abzudichtenden Oberfläche 5 einen Winkel 17 einschließt, der im hier gezeigten Ausführungsbeispiel 18° beträgt. Das Verhältnis der Länge der Verbindungslinie 15 zwischen dem zweiten Dichtbereich 9 und dem dritten Dichtbereich 10 zur Ausdehnung des Einbauraums 4 parallel zur Erstreckung der abzudichtenden Oberfläche 5 beträgt im hier gezeigten Ausführungsbeispiel 1,2.

Der Dichtring 1 weist zwei dynamisch beanspruchte Dichtlippen 6, 7 auf, die die abzudichtende Oberfläche 5 des ersten Maschinenelements 2 unter elastischer Vorspannung dichtend umschließen. Auch eine vollflächige Dichtfläche wäre denkbar. Die dem abzudichtenden Raum 14 abgewandte zweite Dichtlippe 7 hat die Aufgabe, einerseits Verunreinigungen aus der Umgebung 16 von der ersten Dichtlippe 6 fernzuhalten und andererseits Kräfte von der abzudichtenden Oberfläche 5 auf das Profil des Dichtrings 1 zu übertragen, dadurch ein Verkippen des Dichtrings 1 im Einbauraum 4 zu bewirken und den Dichtring 1 dadurch verdrehsicher radial und axial in den Einbauraum 4 einzuklemmen.

## Patentansprüche

1. Dichtungsanordnung, umfassend einen Dichtring (1) zur gegenseitigen Abdichtung zweier Maschinenelemente (2, 3), wobei der Dichtring (1) in einem in Richtung des abzudichtenden ersten Maschinenelements (2) offenen Einbauraum (4) des zweiten Maschinenelements (3) angeordnet ist und die abzudichtende Oberfläche (5) des ersten Maschinenelements (2) mit zumindest einer dynamisch beanspruchten ersten Dichtlippe (6) dichtend berührt, wobei der Dichtring (1) unter elastischer axialer und radialer Vorspannung innerhalb des Einbauraums (4) angeordnet ist, wobei der Dichtring (1) zumindest einen statischen ersten (8) und einen statischen dritten Dichtbereich (10) und einen zweiten Dichtbereich (9) aufweist, wobei der Einbauraum (4) im Wesentlichen nutförmig ausgebildet ist und wobei der erste Dichtbereich (8) den Nutgrund (11), der zweite Dichtbereich (9) eine erste Begrenzungswand (12) und der dritte Dichtbereich (10) eine zweite Begrenzungswand (13) des Einbauraums (4) unter elastischer Vorspannung anliegend berühren, **dadurch gekennzeichnet, dass** der erste Dichtbereich (8) den Nutgrund (11) auf der dem abzudichtenden Raum (14) zugewandten Seite und der dem abzudichtenden Raum (14) zugewandte zweite Dichtbereich (9) die erste Begrenzungswand (12) auf der dem Nutgrund (11) zugewandten Seite berührt, dass der dritte Dichtbereich (10) die zweite Begrenzungswand (13) im Wesentlichen mittig berührt, dass der zweite (9) und der dritte Dichtbereich (10) der gebrauchsfertigen Dichtungsanordnung mit im Einbauraum (4) eingebautem Dichtring (1), der die abzudichtende Oberfläche (5) dichtend berührt, jeweils mittig durch eine gedachte Verbindungslinie (15) verbindbar sind, die mit der abzudichtenden Oberfläche (5) einen Winkel (17) einschließt, der 10° bis 30° beträgt, wobei das Verhältnis der Länge der Verbindungslinie (15) zwischen dem zweiten (9) und dem dritten Dichtbereich (10) zur Ausdehnung des Einbauraums (4) parallel zur Erstreckung der abzudichtenden Oberfläche (5) 1,1 bis 1,3 beträgt.

2. Dichtungsanordnung nach Anspruch 1, **dadurch gekennzeichnet, dass** der Dichtring (1) zwei mit Abstand zueinander benachbart angeordnete dynamisch beanspruchte erste (6) und zweite Dichtlippen (7) aufweist, die die abzudichtende Oberfläche (5) des ersten Maschinenelements (2) unter elastischer Vorspannung dichtend berühren.

3. Dichtungsanordnung nach einem der Ansprüche 1 bis 2, **dadurch gekennzeichnet, dass** der Einbauraum (4) C-förmig ausgebildet ist.

4. Dichtungsanordnung nach einem der Ansprüche 1 bis 3, **dadurch gekennzeichnet, dass** der Einbauraum (4) axial in Richtung eines Radialvorsprungs (18) des ersten Maschinenelements (2) offen ist.

5. Dichtungsanordnung nach einem der Ansprüche 1 bis 4, **dadurch gekennzeichnet, dass** das erste Maschinenelement (2) durch eine dreh- und/oder schwenkbare Welle gebildet ist.

6. Dichtungsanordnung nach Anspruch 5, **dadurch gekennzeichnet, dass** das erste Maschinenelement (2) als Antrieb eines Verstellpropellers ausgebildet ist.

7. Dichtungsanordnung nach einem der Ansprüche 1 bis 6, **dadurch gekennzeichnet, dass** durch die axiale und radiale Vorspannung des Dichtrings (1) im Einbauraum (4) eine Verdrehsicherung des Dichtrings (1) im Einbauraum (4) gebildet ist.

8. Dichtungsanordnung nach einem der Ansprüche 1 bis 7, **dadurch gekennzeichnet, dass** die axiale und radiale Vorspannung derart bemessen sind, dass im drucklosen Betrieb der Dichtungsanordnung ein Mitdrehen des Dichtrings (1) mit dem abzudichtenden ersten Maschinenelement (2), relativ zum zweiten Maschinenelement (3), verhindert wird.

9. Dichtungsanordnung nach einem der Ansprüche 1 bis 8, **dadurch gekennzeichnet, dass** das Verhältnis der Ausdehnung des Einbauraums (4) parallel zur Erstreckung der abzudichtenden Oberfläche (5) zur Ausdehnung des Dichtrings (1) im herstellungsbedingten, nicht-eingebauten Zustand, in gleicher Richtung größer als 0,9 ist.

10. Verwendung einer Dichtungsanordnung und eines Dichtrings nach einem der Ansprüche 1 bis 9 zur Abdichtung von Dreh- und/oder Schwenkbewegungen eines Verstellpropellers.

## Claims

1. Seal assembly, comprising a sealing ring (1) for the mutual sealing of two machine elements (2, 3), wherein the sealing ring (1) is arranged in an installation space (4) of the second machine element (3), which space is open in the direction of the first machine element (2) to be sealed, and makes contact with the surface (5) to be sealed of the first machine element (2) in a sealing manner by means of at least one dynamically stressed first sealing lip (6), wherein the sealing ring (1) is arranged under elastic axial and radial prestress within the installation space (4), wherein the sealing ring (1) has at least one static first sealing region (8) and one static third sealing region (10) and one second sealing region (9), wherein the installation space (4) is of substantially groove-shaped design, and wherein, under elastic prestress, the first sealing region (8) makes close-fitting contact with the groove base (11) of the installation space (4), the second sealing region (9) makes close-fitting contact with a first boundary wall (12) of said installation space and the third sealing region (10) makes close-fitting contact with a second boundary wall (13) of said installation space, **characterized in that** the first sealing region (8) makes contact with the groove base (11) on the side facing the space (14) to be sealed, and the second sealing region (9) which faces the space (14) to be sealed makes contact with the first boundary wall (12) on the side facing the groove base (11), **in that** the third sealing region (10) makes contact substantially centrally with the second boundary wall (13), and **in that** the second sealing region (9) and the third sealing region (10) of the ready-for-use seal assembly, with a sealing ring (1) which is installed in the installation space (4) and makes contact in a sealing manner with the surface (5) to be sealed, can each be connected centrally by an imaginary connecting line (15) which encloses an angle (17) of 10° to 30° with the surface (5) to be sealed, the ratio of the length of the connecting line (15) between the second sealing region (9) and the third sealing region (10) to the extension of the installation space (4) parallel to the extent of the surface (5) to be sealed being 1.1 to 1.3.

2. Seal assembly according to Claim 1, **characterized in that** the sealing ring (1) has two first sealing lips (6) and second sealing lips (7) which are arranged adjacent to each other at a distance, are dynamically stressed and make contact in a sealing manner under elastic prestress with the surface (5) to be sealed of the first machine element (2).

3. Seal assembly according to either of Claims 1 and 2, **characterized in that** the installation space (4) is of C-shaped design.

4. Seal assembly according to one of Claims 1 to 3, **characterized in that** the installation space (4) is open axially in the direction of a radial projection (18) of the first machine element (2).

5. Seal assembly according to one of Claims 1 to 4, **characterized in that** the first machine element (2) is formed by a rotatable and/or pivotable shaft.

6. Seal assembly according to Claim 5, **characterized in that** the first machine element (2) is designed as a drive of a controllable pitch propeller.

7. Seal assembly according to one of Claims 1 to 6, **characterized in that** the axial and radial prestressing of the sealing ring (1) in the installation space (4) secures the sealing ring (1) against rotation in the installation space (4).

8. Seal assembly according to one of Claims 1 to 7, **characterized in that** the axial and radial prestressing are designed in such a manner that, during the non-pressurized operation of the seal assembly, the sealing ring (1) is prevented from rotating relative to the second machine element (3) together with the first machine element (2) to be sealed.

9. Seal assembly according to one of Claims 1 to 8, **characterized in that** the ratio of the extension of the installation space (4) parallel to the extent of the surface (5) to be sealed to the extension of the sealing ring (1) in the non-installed state brought about by the manufacturing process is greater than 0.9 in the same direction.

10. Use of a seal assembly and of a sealing ring according to one of Claims 1 to 9 for sealing rotational and/or pivoting movements of a controllable pitch propeller.

## Revendications

1. Agencement de joint, comprenant une bague d'étanchéité (1) pour l'étanchéité mutuelle de deux éléments de machine (2, 3), la bague d'étanchéité (1) étant disposée dans un espace de montage (4) du deuxième élément de machine (3) ouvert dans la direction du premier élément de machine (2) à étancher, et la surface à étancher (5) du premier élément de machine (2) venant en contact de manière hermétique avec au moins une première lèvre d'étanchéité (6) à contrainte dynamique, la bague d'étanchéité (1) étant disposée avec précontrainte élastique axiale et radiale à l'intérieur de l'espace de montage (4), la bague d'étanchéité (1) présentant au moins une première région d'étanchéité statique (8) et une troisième région d'étanchéité statique (10), et une deuxième région d'étanchéité (9), l'espace de montage (4) étant réalisé sensiblement en forme de rainure et la première région d'étanchéité (8) venant en contact en appui avec le fond de rainure (11), la deuxième région d'étanchéité (9) venant en contact en appui avec une première paroi de limitation (12) et la troisième région d'étanchéité (10) venant en contact en appui avec une deuxième paroi de limitation (13) de l'espace de montage (4), avec une précontrainte élastique, **caractérisé en ce que** la première région d'étanchéité (8) vient en contact avec le fond de rainure (11) du côté tourné vers l'espace à étancher (14) et la deuxième région d'étanchéité (9) tournée vers l'espace à étancher (14) vient en contact avec la première paroi de limitation (12) du côté tourné vers le fond de rainure (11), la troisième région d'étanchéité (10) vient en contact sensiblement au milieu avec la deuxième paroi de limitation (13), la deuxième (9) et la troisième (10) région d'étanchéité de l'agencement de joint prêt à l'utilisation peuvent être connectées à chaque fois au milieu par une ligne de connexion imaginaire (15) à la bague d'étanchéité (1) montée dans l'espace de montage (4), qui vient en contact hermétique avec la surface à étancher (5), la ligne de connexion (15) formant avec la surface à étancher (5) un angle (17), qui vaut de 10° à 30°, le rapport de la longueur de la ligne de connexion (15) entre la deuxième (9) et la troisième (10) région d'étanchéité, pour la dilatation de l'espace de montage (4) parallèlement à l'étendue de la surface à étancher (5), valant entre 1,1 et 1,3.

2. Agencement de joint selon la revendication 1, **caractérisé en ce que** la bague d'étanchéité (1) présente deux premières (6) et deuxièmes (7) lèvres d'étanchéité à contrainte dynamique disposées en position adjacente mais à distance l'une de l'autre, qui viennent en contact hermétique avec la surface à étancher (5) du premier élément de machine (2) avec précontrainte élastique.

3. Agencement de joint selon l'une quelconque des revendications 1 à 2, **caractérisé en ce que** l'espace de montage (4) est réalisé en forme de C.

4. Agencement de joint selon l'une quelconque des revendications 1 à 3, **caractérisé en ce que** l'espace de montage (4) est ouvert axialement dans la direction d'une saillie radiale (18) du premier élément de machine (2).

5. Agencement de joint selon l'une quelconque des revendications 1 à 4, **caractérisé en ce que** le premier élément de machine (2) est formé par un arbre rotatif et/ou pivotant.

6. Agencement de joint selon la revendication 5, **caractérisé en ce que** le premier élément de machine (2) est réalisé sous forme d'entraînement d'une hélice variable.

7. Agencement de joint selon l'une quelconque des revendications 1 à 6, **caractérisé en ce qu'**une protection contre la rotation de la bague d'étanchéité (1) dans l'espace de montage (4) est réalisée par la précontrainte axiale et radiale de la bague d'étanchéité (1) dans l'espace de montage (4).

8. Agencement de joint selon l'une quelconque des revendications 1 à 7, **caractérisé en ce que** la précontrainte axiale et radiale est dimensionnée de telle sorte qu'un entraînement en rotation de la bague d'étanchéité (1) avec le premier élément de machine (2) à étancher, par rapport au deuxième élément de machine (3), soit évité pendant le fonctionnement sans pression de l'agencement de joint.

9. Agencement de joint selon l'une quelconque des revendications 1 à 8, **caractérisé en ce que** le rapport de la dilatation de l'espace de montage (4) parallèlement à l'étendue de la surface à étancher (5) pour la dilatation de la bague d'étanchéité (1) dans l'état prédéfini par la fabrication, non monté, dans la même direction, est supérieur à 0,9.

10. Utilisation d'un agencement de joint et d'une bague d'étanchéité selon l'une quelconque des revendications 1 à 9, pour l'étanchéité de mouvements de rotation et/ou de pivotement d'une hélice variable.
